# EUROPEAN PATENT APPLICATION

(11) **EP 0 976 783 A1**
(43) Date of publication of application: **02.02.2000**
(21) Application number: 98202527.2
(22) Date of filing: 28.07.1998
(51) Int. Cl.: C08L 21/00, C08L 23/10, C08L 23/20

(54) **Thermoplastic elastomer**

(71) Applicant: DSM N.V., 6411 TE Heerlen (NL)
(72) Inventor: Willems, Edwin, 6136 BV Sittard (NL)

(57) **Abstract**

The invention relates to a process for the preparation of a thermoplastic elastomer (TPE) comprising a blend of polypropylene, polymethylpentene and an at least partially vulcanized rubber.

The invention is characterized in that the TPE is obtained by a dynamic vulcanization of a mixture of the polypropylene, the polymethylpentene and the rubber, in the presence of a vulcanizing agent.

The invention also relates to such TPE's with a hardness below 88 Shore A, as well as to articles made therefrom.

## Description

The present invention relates to (a process for the preparation of) a thermoplastic elastomer (TPE) comprising a blend of polypropylene, polymethylpentene and an at least partially vulcanized rubber.

Such a process is known from JP-A-03/188,144 wherein a blend of polypropylene and an EPDM is vulcanized with a phenolic resin, after which the resulting product is blended with a polymethylpentene, as a result of which high temperature properties are obtained.

This process has many drawbacks: it is a complicated, more steps process. The process results in thermoplastic elastomers having a relatively high hardness (≥ 88 Shore A) caused by the fact that the initial blend of polypropylene and vulcanized EPDM, in order to result in a TPE, dictates a certain minimum hardness. As a result hereof low hardness products with high temperature properties are not attainable.

There is a need for an improved thermoplastic elastomer, wherein good high temperature properties are combined with improved compression set and storage modulus of the TPE, in particular at elevated temperatures (≥ 150°C); especially there is a need for TPE's having a lower hardness.

The process according to the invention is characterized in that the TPE is obtained by a dynamic vulcanization of a mixture of the polypropylene, the polymethylpentene and the rubber, in the presence of a vulcanizing agent.

The advantage of this process according to the present invention is that it is simple, the total polymer morphology (degree of dispersion of the individual polymeric ingredients) can be better controlled; a broader range of hadnesses is attainable, next to excellent high temperature properties.

A (process for preparing a) thermoplastic elastomer (TPE) comprising a blend of a polyolefin (and more particular a polypropylene) and an at least partially vulcanized rubber is known in the art. A typical reference is US-A-4,130,535, in which the TPE is preferably prepared by a dynamic vulcanization process.

Present inventors have found that simply replacing the polypropylene in such a blend by polymethylpentene does not result in an acceptable TPE: the blend very easily becomes a thermoset product due to the fact that the crosslinked rubberphase formes the matrix of the product. The use of polypropylene alone does also not result in the properties aimed at. It has now surprisingly been found that when a TPE is prepared from a mixture comprising polypropylene, polymethylpentene, the rubber and a vulcanizing agent, the resulting product has the good morphology (the crosslinked rubber forms a dispersed phase (instead of the matrix)), accompanied by excellent physical properties.

The ratio between the amount of polymethylpentene and the amount of polypropylene at which the improved properties of the TPE are obtained in generally between 10/90 and 90/10. More preferred, this ratio is between 15/85 and 85/15. For excellent high temperature properties this ratio is preferably between 50/50 and 75/25. Under these circumstances it seems the case that the polypropylene is predominantely present as a shell around a dispersed rubber particle, in a matrix of polymethylpentene.

The invention also relates to a thermoplastic elastomer (TPE) comprising a blend of polypropylene, polymethylpentene and an at least partially crosslinked rubber, said TPE being characterized in that it has a Shore A hardness between 35 and 86; preferably, the TPE has a hardness of between 50 and 75 Shore A. These low hardness grades are not obtainable according to the above mentioned prior art process.

The polypropylene to be used according to the present invention can be any known, (semi-) crystalline polypropylene known in the art; either in the form of a homopolymer or in the form of a copolymer resin. In case of a copolymer, the content of propylene in said copolymer is at least 75 wt.%. The Melt flow index (MFI) of the polypropylene generally is between 0.3 and 50; more preferred the MFI is below 20 (according to ISO norm 1133 (230°C; 2.16 kg lead)).

The polymethylpentene, a product originating from the polymerization of 4-methyl-1-pentene, can also be in homopolymeric or in copolymeric form. This polymerisation is preferably done with the use of a Ziegler-Natta catalyst, resulting in highly regular, partially crystalline polymers with a high melting point (above 220°C). Commercially available copolymeric polymethylpentene is made by a copolymerization of 4-methyl-1-pentene with linear α-olefins having 6-16 C-atoms, like 1-pentene, 1-hexene, 1-octene, 1-decene. Reference can be had to the Encyclopedia of Polymer Science and Engineering, vol 9, pages 707-718, 1987.

The thermoplastic elastomer (TPE) according to the present invention also comprises an at least partially vulcanized rubber. The rubber in the TPE according to the present invention can be any rubber known in the art. Rubbers useful are butylrubber (copolymer as well as terpolymers, and also in its halogenated form); ethylene/α-olefin copolymer rubber (EAM) as well as ethylene/α-olefin/diene terpolymer rubber (EADM); acrylonitrile/butadiene rubber (NBR); styrene/butadiene rubber (SBR); natural rubber (NR); the rubber can also be styrene based thermoplastic elastomer (STPE). An STPE is a styrene blockcopolymer of the form A-B-A, in which A is a polystyrene chain and B a diene chain, such as polybutadiene or polyisopropene. The polystyrene may also be based on substituted styrenes, like α-methylstyrene. The styrene/diene molar ratio generally ranges from 50/50 to 15/85. A preferred form of STPE is at least one of styrene-butadiene-styrene blockcopolymers (SBS) and their partially or fully hydrogenated derivatives (SEBS). Another preferred form of STPE is a triblock copolymer based on polystyrene and vinyl bonded polyisoprene, and the (partially) hydrogenated derivatives thereof (such copolymers commercially being available form Kuraray under the name "VS-polymers"). Also polystyrenic blockcopolymers like polystyrene block-poly(ethylene-co-propylene)-block polystyrene (SEEPS or SEPS), can be advantageously applied. In case of EAM or EADM rubber, the α-olefin in such a rubber is preferably propylene; in such a case the rubber is referred to as EP(D)M. It is also possible to use a mixture of such rubbers.

The TPE (prepared) according to the present invention can succesfully be used in those applications where the outstanding properties of the product, especially the high-temperature properties are of benefit. Reference can be had to automotive parts, especially under the hood (like clean air ducts, cable coating, boots and bellows, hoses), machinery, domestic equipment. It can also be used in a hard/soft-combination, like coextrusion, sequential and 3D/2C (i.e. three dimensions and two components) extrusion, like for clean air ducts.

Especially, the TPE can be used to prepare a foamed thermoplastic elastomeric article. To foam the TPE, any method known in the art can be used. One or more chemical as well as physical blowing agents can be used (like azodicarbonamides, low boiling hydrocarbons, water, N₂, CO₂ or water releasing chemical compounds). The blowing agent(s) can be dry-blended or meltblended with the TPE (provided that the blend-temperature is below the activation temperature of the blowing agent) or can be mixed in gaseous or liquid form in the molten TPE. Preferably the TPE contains the blowing agent. The amount of blowing agent is dependant on the type of blowing agent: the more blowing gas is liberated per unit weight of blowing agent, the less is needed for a certain result. The person skilled in the art can readily ascertain the suitable effective amount of the appropriate blowing agent for the particular type of polymeric foam.

Next to the indicated compounds, the TPE of the present invention may contain additional ingredients, in itself known to be used in thermoplastic elastomers, like fillers, colourants, (UV) stabilizers, flow-improvers, antioxidants.

The invention will be elucidated by means of the following Examples and comparative experiments, which are not meant to restrict the invention.

All dynamic vulcanizations were executed on a co-rotating Werner & Pfleiderer twin screw extruder with an L/D-ratio of 40, a throughput of 40 kg/h, at a screwspeed of 450 rpm. The melt temperature at the end of the extruder was 260-280°C.

All the indicated raw materials were added on the hopper except for 40 parts of oil, which were injected on the extruder, after the dynamic vulcanization had been started.

Different properties of the so obtained products were analyzed:
- Shore A hardness, according to ASTM .....
- tensile strength, according to ASTM .....
- elongation, according to ASTM .....
- 100% modulus, according to ASTM .....
- compression set (CS), according to ASTM ..... at different temperatures
- storage modules, according to ASTM ..... at different temperatures.

### Examples I to VI

A mixture of 200 parts of EPDM (Keltan® P597 of DSM), 144 parts of thermoplastic, 1 part stannous chloride, 5 parts phenolic resin (Schenectady SP1045), and 5 parts zinc oxide was dynamically vulcanized. The 144 parts thermoplastic fraction consisted of polypropylene homopolymer (Stamylan® P13E10 of DSM) and polymethylpentene (TPX MX004 of Mitsui Chemicals) in different ratios. Additionally 40 parts of oil (Sunpar 150) were added at the middle of the extruder via injection. The properties of the obtained thermoplastic elastomer compositions were analyzed on injection moulded parts.

### Comparative experiments A and B

Same procedure and composition as Example I, but now the thermoplastic part is either 144 parts polypropylene (Stamylan® P13E10) or 144 parts polymethylpentene (TPX MX004). The result of comparative experiment B was an unprocessable, thermoset composition.

### Examples VII and VIII

Same procedure and composition as Example IV, but now different polymethylpentenes (TPX MX002 and TPX RT18, Mitsui Chemicals) have been used.

### Comparative experiment C

Example I was repeated, but use was made of 88 parts of polypropylene (Stamylan P13E10), to obtain a product with a hardness comparable to the products of Examples III-VI.

**Table 1**

| **Example/Comp. experiment** | **A** | **I** | **II** | **III** | **B** |
|---|---|---|---|---|---|
| EPDM | 100 | 100 | 100 | 100 | 100 |
| polypropylene | 144 | 96 | 72 | 48 | - |
| polymethylpentene | - | 48 | 72 | 96 | 144 |
| oil | 140 | 140 | 140 | 140 | 140 |
| stannous chloride | 1 | 1 | 1 | 1 | 1 |
| vulcanizing agent | 5 | 5 | 5 | 5 | 5 |
| zinc oxide | 5 | 5 | 5 | 5 | 5 |
| Hardness [Shore A] | 92 | 89 | 88 | 87 | 84 |
| Tensile strength [MPa] | 15.5 | 10.4 | 9.7 | 7.4 | 2.5 |
| Elongation [%] | 566 | 488 | 477 | 427 | 30 |
| 100% modulus [MPa] | 5.7 | 4.7 | 4.5 | 3.6 | - |
| CS 22h/125°C [%] | 69 | 62 | 59 | 54 | 54 |
| CS 22h/150°C [%] | 87 | 77 | 72 | 65 | 62 |
| Storage modulus 25°C [MPa] | 61.5 | 54.0 | 49.0 | 35.4 | 26.4 |
| Storage modulus 125°C [MPa] | 11.4 | 10.0 | 8.0 | 7.0 | 5.4 |
| Storage modulus 150°C [MPa] | 4.0 | 2.8 | 2.8 | 3.3 | 4.2 |
| Storage modulus 200°C [MPa] | - | - | - | 0.9 | 2.4 |

**Table 2**

| **Example/Comp. experiment** | **IV** | **V** | **VI** | **C** |
|---|---|---|---|---|
| EPDM | 100 | 100 | 100 | 100 |
| polypropylene | 36 | 29 | 16 | 88 |
| polymethylpentene | 108 | 115 | 128 | - |
| oil | 140 | 140 | 140 | 140 |
| stannous chloride | 1 | 1 | 1 | 1 |
| vulcanizing agent | 5 | 5 | 5 | 5 |
| zinc oxide | 5 | 5 | 5 | 5 |
| Hardness [Shore A] | 86 | 85 | 84 | 86 |
| Tensile strength [MPa] | 6.8 | 6.1 | 5.2 | 10.7 |
| Elongation [%] | 418 | 370 | 351 | 585 |
| 100% modulus [MPa] | 3.4 | 3.4 | 3.2 | 3.8 |
| CS 22h/125°C [%] | 53 | 51 | 49 | 63 |
| CS 22h/150°C [%] | 62 | 59 | 58 | 79 |
| Storage modulus 25°C [MPa] | 33.2 | 29.2 | 27.3 | 37.8 |
| Storage modulus 125°C [MPa] | 6.6 | 6.3 | 6.1 | 7.0 |
| Storage modulus 150°C [MPa] | 3.9 | 4.0 | 4.2 | 1.8 |
| Storage modulus 200°C [MPa] | 1.0 | 1.2 | 1.5 | - |

**Table 3**

| **Examples** | **VII** | **IV** | **VIII** |
|---|---|---|---|
| EPDM | 100 | 100 | 100 |
| polypropylene | 36 | 36 | 36 |
| TPX MX002 [phr] | 108 | - | - |
| polymethylpentene type A | | | |
| TPX MX004 [phr] polymethylpentene type B | - | 108 | - |
| TPX RT18 [phr] polymethylpentene type C | - | - | 108 |
| oil | 140 | 140 | 140 |
| stannous chloride | 1 | 1 | 1 |
| vulcanizing agent | 5 | 5 | 5 |
| zinc oxide | 5 | 5 | 5 |
| Hardness [Shore A] | 84 | 86 | 88 |
| Tensile strength [MPa] | 6.3 | 6.8 | 6.3 |
| Elongation [%] | 416 | 418 | 348 |
| 100% modulus [MPa] | 3.2 | 3.4 | 3.9 |
| CS 22h/125°C [%] | 55 | 53 | 48 |
| CS 22h/150°C [%] | 62 | 62 | 58 |
| Storage modulus 25°C [MPa] | 24.8 | 33.2 | 43.0 |
| Storage modulus 125°C [MPa] | 5.1 | 6.6 | 7.5 |
| Storage modulus 150°C [MPa] | 2.6 | 3.9 | 4.3 |
| Storage modulus 200°C [MPa] | 0.6 | 1.0 | 1.5 |

## Claims

1. Process for the preparation of a thermoplastic elastomer (TPE) comprising a blend of polypropylene, polymethylpentene and an at least partially vulcanized rubber, characterized in that the TPE is obtained by a dynamic vulcanization of a mixture of the polypropylene, the polymethylpentene and the rubber, in the presence of a vulcanizing agent.

2. Process according to claim 1, characterized in that in the mixture the weight ratio between the polymethylpentene and the polypropylene is between 15/85 and 85/15.

3. Process according to claim 2, characterized in that the ratio is between 50/50 and 75/25.

4. Process according to anyone of claims 1-3, characterized in that the rubber is selected from the group comprising EPM, EPDM, a styrene based thermoplastic elastomer, and butylrubber.

5. Process according to anyone of claims 1-4, characterized in that the rubber is vulcanized with a phenolic curative.

6. Process according to anyone of claims 1-5, characterized in that the dynamic vulcanization results in a TPE having an amount of extractable rubber of less than 15 weight %, based on the total amount of rubber.

7. Process according to claim 6, characterized in that the amount of extractable rubber is less than 5 weight %.

8. Process according to anyone of claims 1-7, characterized in that the dynamic vulcanization takes place in an extruder.

9. Thermoplastic elastomer, comprising a blend of polypropylene, polymethylpentene and an at least partially crosslinked rubber, having a Shore A hardness of between 35 and 86.

10. Thermoplastic elasomer according to claim 9, characterized in that the hardness is between 50 and 75 Shore A.

11. Thermoplastic elastomer, obtained by a process according to anyone of claims 1-8.

12. Thermoplastic elastomeric article on the basis of a thermoplastic elastomer (obtained by a process) according to anyone of claims 1-11.

13. Foamed thermoplastic elastomeric article made by foaming a thermoplastic elastomer (obtained by a process) according to anyone of claims 1-11.
